# EUROPEAN PATENT APPLICATION

(11) **EP 0 825 371 A1**
(43) Date of publication of application: **25.02.1998**
(21) Application number: 97830422.8
(22) Date of filing: 13.08.1997
(51) Int. Cl.: F16K 31/40, F16K 1/44

(54) **Safety solenoid valve for pipelines with automatic check of pipeline system seal**

(30) Priority: 21.08.1996 IT VR960072
(71) Applicant: Marangoni, Luigi, 37040 Terrazzo (IT)
(72) Inventor: Marangoni, Luigi, 37040 Terrazzo (IT)
(74) Representative: Sarpi, Maurizio

(57) **Abstract**

The device is a safety solenoid valve that can be installed upstream in all pipeline systems that use above all piped fuel gases. The main characteristic of the device is that it can automatically check, before every opening phase, the seal of the pipeline system and can establish or interrupt flow of the upstream fluid. This is done in a totally automatic way that responds to the actual momentary situation.

Basically solenoid valve (1) in question consists of containing body (2) with, on two opposite sides, two openings (3, 4), one of which is for inlet and the other for output of fluids of any nature.

Body (2) includes chambers (A, B, C, D) defined by diaphragms (8, 10, 17) and by partition wall (14) which is part of the internal fixed structure of body (2) as well as two disk gates (5, 16) which can simultaneously or independently interrupt the flow of fluid from the inlet chamber to the output chamber by suitable equilibrium of pressures.

## Description

This industrial invention patent has as its purpose a safety solenoid valve that can be used in pipelines carrying fluids of all kinds, both liquid and gaseous, with the particular feature that it is made so that it automatically checks pipeline system seal before performing its opening procedure.

As is known several types of automatic and safety valves are used in the heating and plumbing sector.

These, as a general principal, consist of a gate device that either creates or interrupts communication between two environments, the upstream and the downstream environments in the liquid or gaseous fluid pipeline in which the valve itself is inserted.

One of the most common applications consists of safety solenoid valves, generally installed in fuel gas pipelines for example upstream from all systems for heat-generating processes such as boilers, stoves, hot water heaters, etc. These solenoid valves can be of two types: the first consists of solenoid valves with automatic opening and closing while the second regards solenoid valves which are normally open or normally closed and are manually reset.

Automatically opened and closed solenoid valves include a coil which, during normal operating conditions, is powered by grid current that holds the disk gate in its open position and the user is supplied with fuel whereas when there is an interruption in electrical supply, caused, for example, by a gas leak that caused intervention by a safety gas detector to which the coil is connected, the disk gate moves to its closed position in contrast to a spring.

Automatic opening and closing solenoid valves will automatically reopen when the electrical power supply is restored. Manually reset solenoid valves, on the other hand, must be reset by a manual control in order to return to their working condition.

However the above-described safety solenoid valves are subject to several limits, the most important of which is the absence of components that permit them to check pipeline system seal when they open. As a consequence resetting is not always performed in conditions of total safety since the causes that generated blockage may not have been corrected or others not immediately checkable may have arisen in the meanwhile.

Consequently both automatic and manual resetting of known solenoid valves can cause danger situations. A typical case is when there is a small gas leak that is not immediately perceptible by the safety detector nor by the user who may in the meanwhile have manually reset the valve.

The purpose of this invention is to eliminate or at the very least reduce the above-indicated inconveniences.

In particular it has conceived and created a safety solenoid valve, applicable in pipelines for passage of any gaseous or liquid fluid and which can be installed upstream in all pipeline systems that use principally piped fuel gases, the main characteristics of which is that it is able to automatically check pipeline system seal before every opening phase and to determine delivery or maintain interruption in flow of the upstream fluid in a totally automatic manner that responds to the real momentary situation.

The invention in question, as part of its general object, also proposes that this safety solenoid valve be conceived in such a way as to avoid manual resetting, automating the reset phase which in any case takes place in conditions of maximum safety and only when its specific check unit determines, by suitable equilibrium of pressures, that correct operating conditions are present.

In other words the solenoid valve according to this invention, in addition to functioning in a totally independent and automatic manner both for interrupting and for re-establishing delivery of the fluid, presents extremely reliable check and safety characteristics by constantly checking pipeline system seal.

These goals, advantages and particular functions are all achieved, according to this invention, by a safety solenoid valve for pipelines carrying both liquid and gaseous fluids with automatic checking of pipeline system seal which is characterized, in particular, by the fact that inside and at the top of a containing body that includes several intercommunicating chambers in particular positions there is a valve delivery system with a first disk gate controlled by an electric coil or similar device, composed of a vertically sliding central shaft placed in the center of elastic diaphragms and in proximity with at least one contrasting component such as a spring, weight or similar device and with at least one duct working with the mobile nucleus of the aforementioned coil and at the bottom a pressure check valve group consisting of a second disk gate formed of a central shaft coaxial with the preceding shafts and acting in combination with elastic diaphragms and a retaining spring. These two valve or disk gate units can simultaneously or independently interrupt the flow of fluid from the inlet chamber to the output chamber by a suitable equilibrium of pressures that cause movement of the disk gates themselves and closure of a central passage common to both while the delivery phase can only take place when both disk gates are in their open positions.

Other particular characteristics of this invention better appear in the following description of a preferential implementation form illustrated, as an indicative but not limiting form, in the attached drawings where:

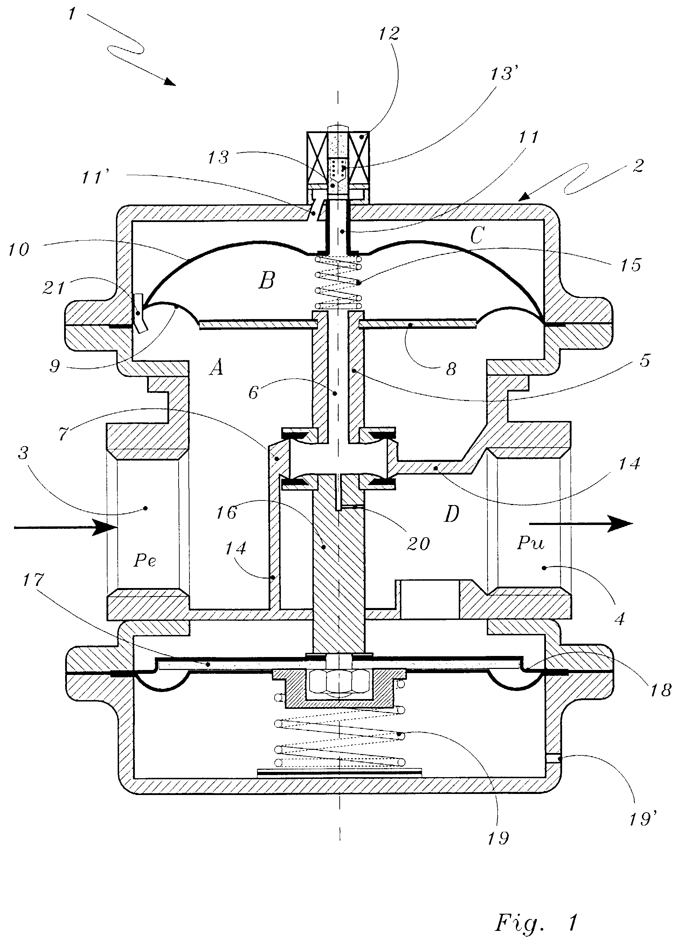

fig. 1 gives a schematic global side view of the solenoid valve according to this invention.

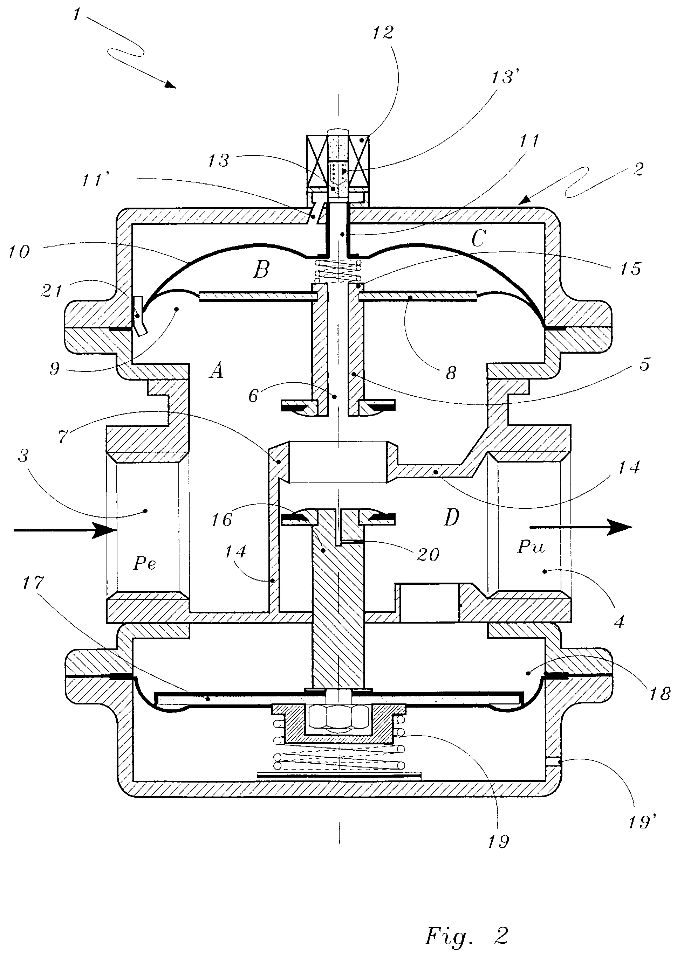

fig. 2 gives a schematic view showing opening of the two disk gates.

With reference to the attached drawings number 1 indicates the safety solenoid valve according to the present invention as a whole, including means for automatic checking of the seal of the pipeline system in which it is installed, which is composed of containing body 2, with a basically cylindrical shape, which has two openings 3 and 4 machined on opposite sides, one of which is designed to connect to the inlet pipe and the other to an output pipe in a pipeline system for ducting fuel or other gases or liquids or in any case fluid materials of whatever nature.

First disk gate 5 is contained inside containing body 2 and slides centrally along a vertical axis and has thru central duct 6. This disk gate terminates on the bottom with a cap and a seal that rest, when it is closed, against ring edge 7 of a fixed seat which we shall describe further on.

The upper part of first disk gate 5 is inserted and fastened to disk-shaped diaphragm 8 which has ring rim 9 fastened to a joint on body 2 and has a special flexibility that prevents any type of sliding against fixed walls, increasing strength and durability characteristics compared to traditional diaphragms.

Diaphragm 8, fastened centrally to first disk gate 5, is coupled to second diaphragm 10 placed above and which has an perforated central part joined to vertical axis duct 11 that enters at its top into electric coil 12 and, more specifically, goes up to its central nucleus 13 which is positioned in contrast to spring 13'.

Disk gate 5 and diaphragms 8 and 10 form three internal chambers indicated by the letters A, B and C. The first of these, A, is formed by diaphragm 8 and by partition wall 14 which is part of the fixed internal structure of body 2. The above-mentioned ring rim 7 of a fixed seat through which the flow of fluid can pass is machined in this partition wall.

The other chambers, B and C, are formed, respectively, of the space between diaphragms 8 and 10 and the space made by diaphragm 10 and the upper internal part of body 2.

Spring 15 is placed between diaphragms 8 and 10 and creates a certain amount of downwards thrust on first disk gate 5. Other devices having the same function can be used such as, for example, weights with a force equivalent to that of the spring, auxiliary diaphragms or similar devices.

The bottom part of the above-indicated solenoid valve includes second disk gate 16 which terminates, at its top, with a cap and a seal that rest, during its closing phase, against lower ring rim 7 of the fixed seat whereas its bottom is fastened to elastic diaphragm 17 with flexible ring rim 18, fastened to a joint on body 2, that has special flexibility that prevents any type of sliding against fixed walls.

The bottom end of the second disk gate is positioned in contrast with spring 19 which is placed in a chamber created by diaphragm 17 and the bottom part or the base of body 2 and where drain hole 19' has been machined and which communicates with the exterior.

Second disk gate 16 is placed in chamber D between fixed wall 14 and output opening 4 and small duct 20 is machined in the top part of disk gate 16 and puts chamber D in communication with duct 6 in first disk gate 5 and consequently chamber D with chamber B through the passage made by seat 7.

Now we shall briefly describe solenoid valve operation according to this invention which can be better understood starting with the system at rest and where the entry pressure in zone 3 is equal to the pipeline pressure and where coil 12 is deactivated.

In these conditions, since duct 11 is closed by mobile nucleus 13 pressed by spring 13', the pressure in chamber A, passing through duct 21, is transferred to chamber C.

There will be the same pressure in chambers B and D which are in communication with each other through ducts 6 and 20. This pressure, Pu (output pressure), at this time, since the plant is being started up, will be equal to atmospheric pressure.

Disk gate 5 is in its closing phase on seat 7 because the forces on diaphragm 8 balance each other out. In fact pressure on B is atmospheric pressure and consequently diaphragm 10, crushing itself up against 8, forms a single diaphragm with the same pressure both on one side and on the other. This disk gate is subject to the force exercised by spring 15 and the force created by Pe (inlet pressure) on the disk gate itself.

Disk gate 16 is closed up against seat 7 because it is pushed only by the force of spring 19. In fact diaphragm 17 has the same atmospheric pressure on both of its sides.

Duct 11 is larger than duct 21 so that, when duct 11 is open and gas is flowing into the solenoid valve, the pressure in C and in B come close to Pu (output pressure).

At this point the system can be started.

Coil 12 is electrified and consequently mobile nucleus 13 is attracted to the fixed nucleus and the duct puts chamber C in communication with chamber D through ducts 11' and 20.

Duct 20 has a precisely calibrated size with a diameter of approximately 0.2 mm which is a size sufficiently small to avoid creating passage of gases but sufficient for checking pipeline system seal.

The pipeline distribution system, with one or more users that can be manually or electrically controlled, is created downstream from the solenoid valve.

If all users are closed and the pipeline system has pneumatic seal then orifice 20 is able to pressurize the entire system and consequently chamber D will also carry the same inlet pressure Pe that exercises a force on diaphragm 17 able to overcome the force of spring 19 that opens disk gate 16.

Spring 19 is set at a value much lower than the force exercised by Pe on diaphragm 17 and consequently disk gate 16 will always remain open. Disk gate 16 will only close if, because of breakage of pipelines or users, the pressure in D drops to levels where it can no longer resist the contrast of spring 19.

If, the moment that coil 12 is electrically powered, a user is open or the plant is subject to mechanical breakage with a passage area equal to or greater than that of duct 20 then inlet pressure Pe cannot be generated in chamber D and consequently disk gate 16 will remain closed.

As we can see this type of solenoid valve guarantees that the seal of the pipeline system is intact or, at most, has losses to the exterior inferior to the delivery rate of duct 20.

Only after searching for and eliminating the pipeline system malfunction will disk gate 16 open and permit, once it is opened, the user to start to function.

When the user is opened chambers B and C will have pressures equal to output pressure Pu which is equal to inlet pressure Pe minus the pressure drop in the solenoid valve.

In any case output pressure Pu will always be less than inlet pressure Pe and therefore diaphragm 8 will find, on chamber A side, inlet pressure Pe and, on chamber B side, outlet pressure Pu which cause disk gate 5 to open.

In these conditions, as long as the coil remains supplied with electricity and output pressure force Pu exercised on diaphragm 17 remains greater than the force of spring 19 then the solenoid valve remains open and functions normally.

Whenever, for various reasons, the electrical power supply to coil 12 is interrupted, mobile nucleus 13 closes duct 11, inlet pressure Pe, passing through duct 21, acts on diaphragm 10 which, finding output pressure Pu in chamber B that is lower than inlet pressure Pe, goes to rest against diaphragm 8, canceling the effect of inlet pressure Pe on diaphragm 8 by chamber A.

In this last case spring 15 and inlet pressure Pe on disk gate 5 cause closure of disk gate 5 itself, bringing the solenoid valve to its start-up position.

As we can see if any diaphragm breaks then the solenoid valve, or more precisely, the disk gates, remain in their block position because the predominating force is the force of the springs or those other mechanisms which perform the same functions.

It is also advantageously provided that a common solenoid valve, of class A for example, or a servocontrolled type of solenoid valve or other device with the same function, can be provided in place of the upper part of the solenoid valve, in place of disk gate 5 and its respective diaphragms.

Another advantage is represented by the fact that an additional disk gate compensation diaphragm can be applied at the site of the stem of lower disk gate 16, useful should the solenoid valve be applied to high pressure systems.

The safety solenoid valve in question, with automatic checking of pipeline system seal, has been described and illustrated according to a preferential solution but several variations can be forecast, technically equivalent to the components and mechanical parts mentioned and which are consequently to be held to be included within the limits of protection of this invention.

## Claims

1. Safety solenoid valve for both liquid and gaseous fluid pipelines with automatic checking of pipeline system seal, characterized in particular by the fact that a containing body (2), comprising several intercommunicating chambers (A, B, C, D) in particular positions, contains in its upper part a valve delivery unit with a first disk gate (5) controlled by an electric coil (12) or similar device, including a central vertically-sliding shaft placed in the center of elastic diaphragms (8, 10) and in proximity to at least one contrast component and at least one duct (11) working together with the mobile nucleus of the aforesaid coil (12), and in the lower part a pressure check valve assembly composed of a second disk gate (16) formed of a central shaft, coaxial to the preceding shafts, acting in combination with elastic diaphragms (17) and a retaining spring (19).

2. Solenoid valve according to the previous claim, characterized by the fact that said contrast component can consist of a spring (15) that imparts a certain downwards thrust on the first disk gate (5) or by other devices having the same function such as, for example, weights calibrated to exercise a force equivalent to that of the spring, auxiliary diaphragms or similar devices.

3. Solenoid valve according to the previous claims characterized by the fact that the two stated valve or gate devices (5, 16) can simultaneously or independently interrupt the flow of fluid from the inlet chamber (A) to the output chamber (D) by means of suitable equilibrium of pressures that cause movement of the disk gates themselves and closure of a central passage (7) common to both of them while delivery can only take place when the two disk gates are both in their open positions.

4. Solenoid valve according to the previous claims characterized by the fact that said first disk gate and respective diaphragms form, inside the solenoid valve body, three chambers A, B and C the first of which, chamber A, is created by lower diaphragm (8) and by partition wall (14) which is part of the internal fixed structure of body (2) on which partition wall above-mentioned ring rim (7) is machined to make a fixed seat through which the flow of fluid can pass.

5. Solenoid valve according to the preceding claims characterized by the fact that the remaining chambers B and C are respectively formed of the space between upper diaphragms (8) and (10) and that formed by diaphragm (10) and the upper internal part of body (2).

6. Solenoid valve according to the preceding claims characterized by the fact that the lower part of the solenoid valve in question includes a second disk gate system (16) which terminates at its top with a cap and a seal that rest, during closure, against lower ring rim (7) of the fixed seat whereas at its bottom it connects to elastic diaphragm (17) with flexible ring rim (18) fastened to a joint in body (2) and has a special flexibility that prevents any type of sliding motion against fixed walls.
